# EUROPEAN PATENT APPLICATION

(11) **EP 2 487 143 A1**
(43) Date of publication of application: **15.08.2012**
(21) Application number: 10822097.1
(22) Date of filing: 07.10.2010
(51) Int. Cl.: C04B 35/565, C04B 41/85, C04B 41/87

(54) **METHOD FOR DENSIFYING POROUS SILICON CARBIDE BASE**

(30) Priority: 09.10.2009 JP 2009235772
(71) Applicant: Shin-Etsu Chemical Co., Ltd., Tokyo 100-0004 (JP)
(72) Inventor: AOKI, Yoshitaka, Annaka-shi Gunma 379-0224 (JP)
(74) Representative: Hallybone, Huw George
(86) International application number: PCT/JP2010/067664
(87) International publication number: WO 2011/043427

(57) **Abstract**

A densified silicon carbide body having excellent mechanical strength. This body is obtained by a method of densifying a porous silicon carbide substrate that includes the steps of impregnating a porous silicon carbide substrate with a curable silicone composition that contains a silicon carbide powder, curing the silicone composition, and thermally decomposing the cured product in a non-oxidizing atmosphere. The porous silicon carbide substrate can be densified and improved easily.

## Description

### Technical Field

The present invention relates to a method of densifying a porous silicon carbide substrate by filling pores within the silicon carbide substrate with silicon carbide using a silicone composition.

### Background Art

Silicon carbide is inherently difficult to sinter, and therefore obtaining a dense sintered compact at normal pressure is problematic, with the silicon carbide typically existing in a porous form (Non-Patent Document 1). Silicon carbide materials are used in applications such as furnace materials, bearings and sliding materials, but in these types of applications, if the silicon carbide is overly porous, then a problem arises in that the mechanical strength may be inadequate. Accordingly, silicon carbides having a dense structure are keenly sought.

Conventionally, known methods of obtaining dense silicon carbide sintered compacts include a method that uses a sintering assistant such as boron (Patent Document 1), a method in which molten silicon is brought into contact with a molded body comprising mainly silicon carbide and carbon (Non-Patent Document 1), and a method in which SiO gas is caused to permeate into a molded body comprising mainly silicon carbide and carbon (Patent Document 2).

However, in the method where a sintering assistant such as boron is used, the sintering assistant causes the resulting silicon carbide sintered compact to be contaminated with impurity elements such as boron, meaning the sintered compact cannot be used in the field of semiconductor device production. In the method that employs contact with molten silicon and the method that involves permeation of SiO gas into the molded body, because the prepared molded body is subjected to further treatment, additional steps are required, and special equipment is also required for performing those steps.

A method has also been disclosed in which a silicon carbide fiber/silicon carbide composite material is impregnated with a molten polycarbosilane, and a non-melting treatment and firing are then performed to densify the composite material (Patent Document 3), but this method has many steps and is complex.

### Prior Art Documents

### Patent Documents

Patent Document 1: JP 2000-247744 A
Patent Document 2: JP 2007-145665 A
Patent Document 3: JP 11-12038 A

### Non-Patent Document

Non-Patent Document 1: "SiC-based Novel Ceramic Materials", edited by the 124th Committee on High-Temperature Ceramic Materials of the Japan Society for the Promotion of Science.

### Summary of the Invention

### Problems Invention Aims to Solve

Accordingly, an object of the present invention is to address the problems associated with the conventional technology described above, and provide a method of simply densifying a porous silicon carbide substrate, while maintaining the purity of the substrate.

### Means for Solution of the Problems

The inventors of the present invention discovered that they were able to achieve the above object by impregnating a porous silicon carbide substrate with a liquid curable silicone composition, and then thermally decomposing the composition to fill the pores of the substrate with silicon carbide.

In other words, the present invention provides a method of densifying a porous silicon carbide substrate, the method comprising the steps of:
impregnating at least the surface layer of a porous silicon carbide substrate with a liquid curable silicone composition,
curing the thus impregnated silicone composition, and
thermally decomposing the thus obtained silicone cured product in an impregnated state within a non-oxidizing atmosphere to convert the cured product to silicon carbide.
The present invention also provides a densified silicon carbide body obtained using this method.
In other words, the present invention provides a densified silicon carbide body having a porous silicon carbide substrate, and a silicon carbide that fills pores within the substrate, at least within the surface layer of the substrate. This densified silicon carbide body can be produced using the densification method described above.

### Effects of the Invention

According to the densification method of the present invention, because the filler material is a liquid silicone composition, it can easily impregnate and fill the pores of the porous silicon carbide substrate.
If a composition containing a silicon carbide powder is used as the liquid curable silicone composition, then the weight loss caused by heating (namely, firing) can be reduced. As a result, the porous silicon carbide substrate can be densified even more easily.

Further, in the method of the present invention, because the purity can be enhanced at the stage of the curable silicone composition used for the impregnation, enabling impurity elements that are detrimental in the field of semiconductor production to be reduced, the resulting densified silicon carbide substrate can easily be formed with a high degree of purity.
In addition to filling pores within the substrate, the silicon carbide may also form a coating on the surface of the silicon carbide substrate, and this case offers the advantage that, even if the substrate contains impurity elements, these impurity elements are encapsulated within the silicon carbide that fills and coats the substrate.

### Embodiments of Carrying Out the Invention

A more detailed description of the present invention is presented below. In this description, "room temperature" refers to the ambient temperature, which can typically change within a range from 10 to 35°C.

The method of the present invention includes, as essential steps:
(1) a step of impregnating at least the surface layer of a porous silicon carbide substrate with a liquid curable silicone composition,
(2) a step of curing the thus impregnated silicone composition, and
(3) a step of thermally decomposing the thus obtained silicone cured product in an impregnated state within a non-oxidizing atmosphere to convert the cured product to silicon carbide.
These steps are described below in sequence.

### - Step (1) -

In step (1), at least a portion of the porous silicon carbide substrate is impregnated with a liquid curable silicone composition containing a silicon carbide powder.

### - Porous Silicon Carbide Substrate:

There are no particular limitations on the method used for producing the porous silicon carbide substrate that acts as the treatment target material for the method of the present invention, and typically, a silicon carbide powder is kneaded together with a binder such as cellulose to prepare a green body, this green body is molded into a desired shape to form a molded body, and the molded body is then fired to obtain a silicon carbide sintered compact of the desired shape. A silicon carbide sintered compact obtained in this manner is typically a porous material having interconnected pores with a pore size of 0.1 µm to 100 µm.

### - Liquid Curable Silicone Composition:

The liquid curable silicone composition used in the method of the present invention preferably contains a silicon carbide powder. This silicon carbide powder suppresses volume shrinkage of the silicone cured product when the cured product is fired and converted to silicon carbide in step (3), and contributes to an improvement in the denseness of the final silicon carbide body. The silicon carbide powder preferably has an average particle size, measured using a laser diffraction/scattering particle size and particle size distribution measurement device, of 0.1 µm to 100 µm, and more preferably 1 µm to 50 µm.
In this description, the "average particle size" refers to the median size, so that if the powder is split into two portions at a specified particle size, with the particles larger than the specified size in one portion and the particles smaller than the specified size in the other portion, then the median size is the particle size at which the mass of the two portions is the same. The silicon carbide powder may employ a commercially available high-purity silicon carbide powder. Further, the silicon carbide powder may also be obtained by heating a silicone powder, and in particular a cured product of a radiation-curable or organic peroxide-curable silicone composition, in a non-oxidizing atmosphere at a temperature within a range from 400 to 1,500°C, thereby converting the silicone powder to an inorganic ceramic composed essentially of carbon, silicon and oxygen, and then thermally decomposing the inorganic ceramic under the same atmosphere at a temperature exceeding 1,500°C but less than 2,200°C.

The amount of the silicon carbide powder within the composition is typically within a range from 5 to 90% by volume, and is preferably within a range from 10 to 80% by volume, and more preferably from 20 to 70% by volume. If the amount of the silicon carbide powder is too small, then the effect of adding the silicon carbide powder diminishes.

Conventional compositions can be used as the curable silicone composition. Specific examples thereof include organic peroxide-curable, radiation-curable, addition-curable and condensation-curable silicone compositions. Organic peroxide-curable and radiation-curable silicone compositions are advantageous in terms of obtaining a higher degree of purity for the filled silicon carbide, and the total amount of impurity elements within the obtained silicon carbide molded body can be suppressed to not more than 1 ppm, preferably not more than 0.5 ppm, and more preferably 0.1 ppm or less. Examples of the impurity elements include Fe, Cr, Ni, Al, Ti, Cu, Na, Zn, Ca, Zr, Mg and B, and the total amount of all these impurity elements can be suppressed in the manner described above.

Examples of organic peroxide-curable silicone compositions include silicone compositions that undergo curing via a radical polymerization, in the presence of an organic peroxide, of a linear organopolysiloxane having alkenyl groups such as vinyl groups at a molecular chain terminal (either at one terminal or at both terminals), at non-terminal positions within the molecular chain, or at both of these positions.

Examples of radiation-curable silicone compositions include ultraviolet light-curable silicone compositions and electron beam-curable silicone compositions.

Examples of ultraviolet light-curable silicone compositions include silicone compositions that undergo curing as a result of the energy of ultraviolet light having a wavelength of 200 to 400 nm. In this case, there are no particular limitations on the curing mechanism. Specific examples of these compositions include acrylic silicone-based silicone compositions comprising an organopolysiloxane containing acryloyl groups or methacryloyl groups, and a photopolymerization initiator, mercapto-vinyl addition polymerization-based silicone compositions comprising a mercapto group-containing organopolysiloxane, an organopolysiloxane that contains alkenyl groups such as vinyl groups, and a photopolymerization initiator, addition reaction-based silicone compositions that use the same platinum group metal-based catalysts as heat-curable, addition reaction-type compositions, and cationic polymerization-based silicone compositions comprising an organopolysiloxane containing epoxy groups, and an onium salt catalyst, and any of these compositions can be used as an ultraviolet light-curable silicone composition.

Examples of electron beam-curable silicone compositions that can be used include any of the silicone compositions that are cured by a radical polymerization that is initiated by irradiating an organopolysiloxane containing radical polymerizable groups with an electron beam.

Examples of addition-curable silicone compositions include silicone compositions that are cured by reacting an aforementioned linear organopolysiloxane having alkenyl groups with an organohydrogenpolysiloxane (via a hydrosilylation addition reaction) in the presence of a platinum group metal-based catalyst.

Examples of condensation-curable silicone compositions include silicone compositions that are cured by conducting a reaction between an organopolysiloxane with both terminals blocked with silanol groups, and an organohydrogenpolysiloxane or a hydrolyzable silane such as a tetraalkoxysilane or an organotrialkoxysilane and/or a partial hydrolysis-condensation product thereof, in the presence of a condensation reaction catalyst such as an organotin-based catalyst, or silicone compositions that are cured by reacting an organopolysiloxane with both terminals blocked with trialkoxy groups, dialkoxyorgano groups, trialkoxysiloxyethyl groups or dialkoxyorganosiloxyethyl groups, in the presence of a condensation reaction catalyst such as an organotin-based catalyst.

However, from the viewpoint of avoiding, as far as possible, the incorporation of impurity elements, radiation-curable silicone compositions and organic peroxide-curable silicone compositions are preferred.

Each of the above curable silicone compositions is described below in detail. In each case, as described above, a silicon carbide powder is included as an essential component, but reference to the silicon carbide powder is omitted in the following descriptions.

### - Organic Peroxide-Curable Silicone Compositions

Specific examples of organic peroxide-curable silicone compositions include compositions comprising:
(a) an organopolysiloxane containing at least two alkenyl groups bonded to silicon atoms,
(b) an organic peroxide, and, as an optional component
(c) an organohydrogenpolysiloxane containing at least two hydrogen atoms bonded to silicon atoms (namely, SiH groups), in an amount that provides 0.1 to 2 mols of hydrogen atoms bonded to silicon atoms within the component (c) per 1 mol of alkenyl groups within the entire curable silicone composition.

### -- Component (a)

The organopolysiloxane of the component (a) is the base polymer of the organic peroxide-curable silicone composition. There are no particular limitations on the polymerization degree of the organopolysiloxane of the component (a), and organopolysiloxanes that are liquid at 25°C through to natural rubber-type organopolysiloxanes can be used as the component (a), but the average polymerization degree is preferably within a range from 50 to 20,000, more preferably from 100 to 10,000, and still more preferably from 100 to approximately 2,000. Further, from the viewpoint of ease of availability of the raw material, the organopolysiloxane of the component (a) is preferably basically a linear structure with no branching, in which the molecular chain is composed of repeating diorganosiloxane units (R¹₂SiO_{2/2} units) and both molecular chain terminals are blocked with triorganosiloxy groups (R¹₃SiO_{1/2}) or hydroxydiorganosiloxy groups ((HO)R¹₂SiO_{1/2} units), or a cyclic structure with no branching in which the molecular chain is composed of repeating diorganosiloxane units, although the structure may partially include some branched structures such as trifunctional siloxane units or SiO₂ units. In the above description, R¹ is as defined below within the description of formula (1).

Examples of organopolysiloxanes that can be used as the component (a) include organopolysiloxanes having at least two alkenyl groups within each molecule, as represented by an average composition formula (1) shown below:

R¹ₐSiO_{(4-a)/2} (1)

wherein R¹ represents identical or different, unsubstituted or substituted monovalent hydrocarbon groups of 1 to 10 carbon atoms, and preferably 1 to 8 carbon atoms, 50 to 99 mol% of the R¹ groups are alkenyl groups, and a represents a positive number within a range from 1.5 to 2.8, preferably from 1.8 to 2.5, and more preferably from 1.95 to 2.05.

Specific examples of R¹ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group and cyclohexyl group; alkenyl groups such as a vinyl group, allyl group, propenyl group, isopropenyl group and butenyl group; and groups in which some or all of the hydrogen atoms within one of the above hydrocarbon groups have each been substituted with a halogen atom such as a fluorine atom, bromine atom or chlorine atom, or a cyano group or the like, including a chloromethyl group, chloropropyl group, bromoethyl group, trifluoropropyl group and cyanoethyl group, although from the viewpoint of achieving high purity, the R¹ groups are preferably composed solely of hydrocarbon groups.

In this case, at least two of the R¹ groups represent alkenyl groups (and in particular, alkenyl groups that preferably contain from 2 to 8 carbon atoms, and more preferably from 2 to 6 carbon atoms). The alkenyl group content among the total of all the organic groups bonded to silicon atoms (that is, among all the unsubstituted and substituted monovalent hydrocarbon groups represented by R¹ within the above average composition formula (1)) is preferably within a range from 50 to 99 mol%, and more preferably from 75 to 95 mol%. In those cases where the organopolysiloxane of the component (a) has a linear structure, these alkenyl groups may be bonded solely to silicon atoms at the molecular chain terminals, solely to non-terminal silicon atoms within the molecular chain, or to both these types of silicon atoms.

### -- Component (b)

The component (b) is an organic peroxide that is used as a catalyst for accelerating the cross-linking reaction of the component (a) in the organic peroxide-curable organopolysiloxane composition. Any conventional organic peroxide can be used as the component (b), provided it is capable of accelerating the cross-linking reaction of the component (a). Specific examples of the component (b) include benzoyl peroxide, 2,4-dichlorobenzoyl peroxide, p-methylbenzoyl peroxide, o-methylbenzoyl peroxide, 2,4-dicumyl peroxide, 2,5-dimethyl-bis(2,5-t-butylperoxy)hexane, di-t-butyl peroxide, t-butyl perbenzoate and 1,1-bis(t-butylperoxycarboxy)hexane, although this is not an exhaustive list.

The amount added of the component (b) must be an amount that is effective as a catalyst for accelerating the cross-linking reaction of the component (a). This amount is preferably within a range from 0.1 to 10 parts by mass, and more preferably from 0.2 to 2 parts by mass, per 100 parts by mass of the component (a). If the amount added of the component (b) is less than 0.1 parts by mass per 100 parts by mass of the component (a), then the time required for curing lengthens, which is economically undesirable. Further, if the amount added exceeds 10 parts by mass per 100 parts by mass of the component (a), then foaming caused by the component (b) tends to occur, and the strength and heat resistance of the cured reaction product tend to be adversely affected.

### -- Component (c)

The organohydrogenpolysiloxane of the component (c), which is an optional component, contains at least two (typically from 2 to 200), and preferably three or more (typically from 3 to 100) hydrogen atoms bonded to silicon atoms (SiH groups). Even when only the component (a) is used, curing can be achieved by adding the component (b) and heating, but by also adding the component (c), because the reaction with the component (a) proceeds readily, curing can be performed at a lower temperature and within a shorter period of time than the case where only the component (a) is used. There are no particular limitations on the molecular structure of the component (c), and conventionally produced linear, cyclic, branched, or three dimensional network (resin-like) organohydrogenpolysiloxanes can be used as the component (c). In those cases where the component (c) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from 2 to 300, and is preferably from 4 to approximately 150. An organohydrogenpolysiloxane that is liquid at room temperature (25°C) can be used particularly favorably as the component (c).

Examples of the component (c) include organohydrogenpolysiloxanes represented by an average composition formula (2) shown below:

R²_{b}H_{c}SiO_{(4-b-c)/2} (2)

wherein R² represents identical or different, unsubstituted or substituted monovalent hydrocarbon groups containing no aliphatic unsaturated bonds and containing 1 to 10 carbon atoms, and preferably 1 to 8 carbon atoms, and b and c represent positive numbers that preferably satisfy 0.7≤b≤2.1, 0.001≤c≤1.0 and 0.8≤b+c≤3.0, and more preferably satisfy 1.0≤b≤2.0, 0.01≤c≤1.0 and 1.5≤b+c≤2.5.
Examples of R² include the same groups as those described above for R¹ within the above average composition formula (1) (but excluding the alkenyl groups).

Specific examples of organohydrogenpolysiloxanes represented by the above average composition formula (2) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The amount added of the component (c) is preferably within a range from 0 to 100 parts by mass, and more preferably from 0 to 50 parts by mass, per 100 parts by mass of the component (a). If the amount added of the component (c) exceeds 100 parts by mass per 100 parts by mass of the component (a), then foaming caused by the component (c) tends to occur, and the strength and heat resistance of the cured reaction product tend to be adversely affected.

### - Ultraviolet Light-Curable Silicone Compositions

Specific examples of ultraviolet light-curable silicone compositions include compositions comprising:
(d) an ultraviolet light-reactive organopolysiloxane, and
(e) a photopolymerization initiator.

### -- Component (d)

The ultraviolet light-reactive organopolysiloxane of the component (d) typically functions as the base polymer in the ultraviolet light-curable silicone composition. Although there are no particular limitations on the component (d), the component (d) is preferably an organopolysiloxane containing at least two, more preferably from 2 to 20, and most preferably from 2 to 10, ultraviolet light-reactive groups within each molecule. The plurality of ultraviolet light-reactive groups that exist within this organopolysiloxane may be the same or different.

From the viewpoint of ease of availability of the raw material, the organopolysiloxane of the component (d) is preferably basically either a linear structure with no branching, in which the molecular chain (the main chain) is composed of repeating diorganosiloxane units (R¹₂SiO_{2/2} units), and both molecular chain terminals are blocked with triorganosiloxy groups (R¹₃SiO_{1/2}), or a cyclic structure with no branching in which the molecular chain is composed of repeating diorganosiloxane units, although the structure may partially include some branched structures such as trifunctional siloxane units or SiO₂ units. In the above description, R¹ is the same as defined above in relation to formula (1). In those cases where the organopolysiloxane of the component (d) has a linear structure, the ultraviolet light-reactive groups may exist solely at the molecular chain terminals or solely at non-terminal positions within the molecular chain, or may also exist at both these positions, although structures containing ultraviolet light-reactive groups at least at both molecular chain terminals are preferred.

Examples of the ultraviolet light-reactive groups include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as an epoxy group and hydrosilyl group, and of these, an acryloyl group, methacryloyl group, mercapto group, epoxy group or hydrosilyl group is preferred, and an acryloyl group or methacryloyl group is particularly desirable.

Although there are no particular limitations on the viscosity of the organopolysiloxane, the viscosity at 25°C is preferably within a range from 100 to 1,000,000 mPa·s, more preferably from 200 to 500,000 mPa·s, and still more preferably from 200 to 100,000 mPa·s.

Examples of preferred forms of the component (d) include organopolysiloxanes containing at least two ultraviolet light-reactive groups, represented by either a general formula (3 a) shown below:

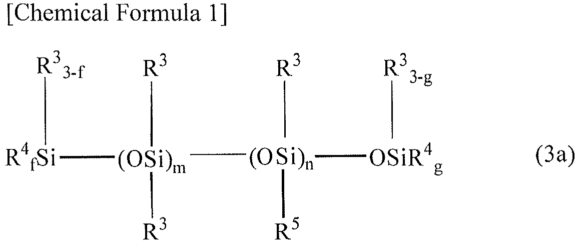

wherein R³ represents identical or different, unsubstituted or substituted monovalent hydrocarbon groups that contain no ultraviolet light-reactive groups, R⁴ represents identical or different groups that contain an ultraviolet light-reactive group, R⁵ represents identical or different groups that contain an ultraviolet light-reactive group, m represents an integer of 5 to 1,000, n represents an integer of 0 to 100, f represents an integer of 0 to 3, and g represents an integer of 0 to 3, provided that f+g+n≥2,
or a general formula (3b) shown below:

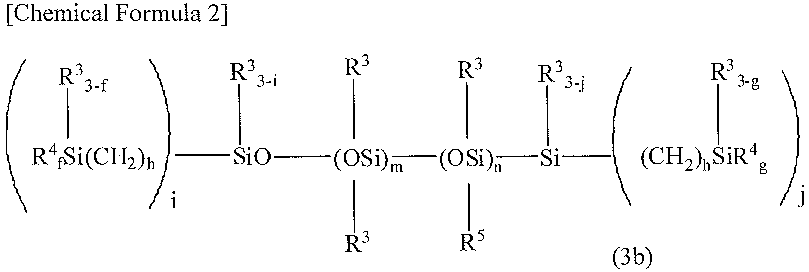

wherein R³, R⁴, R⁵, m, n, f and g are as defined above for the general formula (3a), h represents an integer of 2 to 4, and i and j each represents an integer of 1 to 3, provided that fi+gj+n≥2.

In the above general formulas (3a) and (3b), R³ represents identical or different, unsubstituted or substituted monovalent hydrocarbon groups that contain no ultraviolet light-reactive groups and preferably contain from 1 to 20 carbon atoms, more preferably from 1 to 10 carbon atoms, and most preferably from 1 to 8 carbon atoms. Examples of the monovalent hydrocarbon groups represented by R³ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group, cyclohexyl group and cyclopentyl group; aralkyl groups such as a benzyl group and phenylethyl group; and groups in which some or all of the hydrogen atoms within one of the above hydrocarbon groups have each been substituted with a halogen atom, cyano group or carboxyl group or the like, including a chloromethyl group, chloropropyl group, bromoethyl group, trifluoropropyl group, cyanoethyl group and 3-cyanopropyl group, and of these, a methyl group or phenyl group is preferred, and a methyl group is particularly desirable. Furthermore, the monovalent hydrocarbon group represented by R³ may also include one or more sulfonyl groups, ether linkages (-O-) and/or carbonyl groups or the like within the group structure.

In the above general formulas (3a) and (3b), examples of the ultraviolet light-reactive groups contained within the groups R⁴ and R⁵ include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as a mercapto group, epoxy group and hydrosilyl group, and of these, an acryloyl group, methacryloyl group, epoxy group or hydrosilyl group is preferred, and an acryloyl group or methacryloyl group is particularly desirable. Accordingly, the groups comprising an ultraviolet light-reactive group represented by R⁴ and R⁵ are monovalent groups that contain any of the above ultraviolet light-reactive groups, and specific examples of R⁴ and R⁵ include a vinyl group, allyl group, 3-glycidoxypropyl group, 2-(3,4-epoxycyclohexyl)ethyl group, 3-methacryloyloxypropyl group, 3-acryloyloxypropyl group, 3-mercaptopropyl group, 2-{bis(2-methacryloyloxyethoxy)methylsilyl}ethyl group, 2-{bis(2-acryloyloxyethoxy)methylsilyl}ethyl group, 2-{(2-acryloyloxyethoxy)dimethylsilyl}ethyl group, 2-{bis(1,3-dimethacryloyloxy-2-propoxy)methylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group, and examples of preferred groups include a 3-methacryloyloxypropyl group, 3-acryloyloxypropyl group, 2-{bis(2-methacryloyloxyethoxy)methylsilyl}ethyl group, 2-{bis(2-acryloyloxyethoxy)methylsilyl}ethyl group, 2-{(2-acryloyloxyethoxy)dimethylsilyl}ethyl group, 2-{(1,3-dimethacryloyloxy-2-propoxy)dimethylsilyl} ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group. R⁴ and R⁵ may be either the same or different, and individual R⁴ and R⁵ groups may be the same as, or different from, other R⁴ and R⁵ groups.

In the above general formulas (3a) and (3b), m is typically an integer of 5 to 1,000, preferably an integer of 10 to 800, and more preferably an integer of 50 to 500. n is typically an integer of 0 to 100, preferably an integer of 0 to 50, and more preferably an integer of 0 to 20. f is an integer of 0 to 3, preferably an integer of 0 to 2, and more preferably 1 or 2. g is an integer of 0 to 3, preferably an integer of 0 to 2, and more preferably 1 or 2. In the above general formula (3b), h is typically an integer of 2 to 4, and is preferably 2 or 3. Each of i and j represents an integer of 1 to 3, and preferably an integer of 1 or 2. Moreover, as described above, the organopolysiloxanes represented by the above general formulas (3a) and (3b) contain at least two of the above ultraviolet light-reactive groups, and consequently f+g+n≥2 in the formula (3a), and fi+gj+n≥2 in the formula (3b).

Specific examples of organopolysiloxanes represented by the above formulas (3a) and (3b) include the compounds shown below.

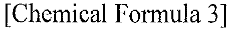

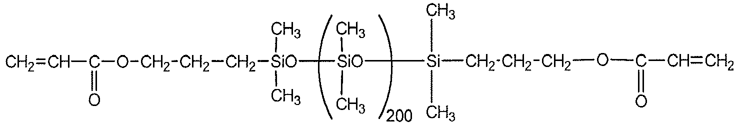

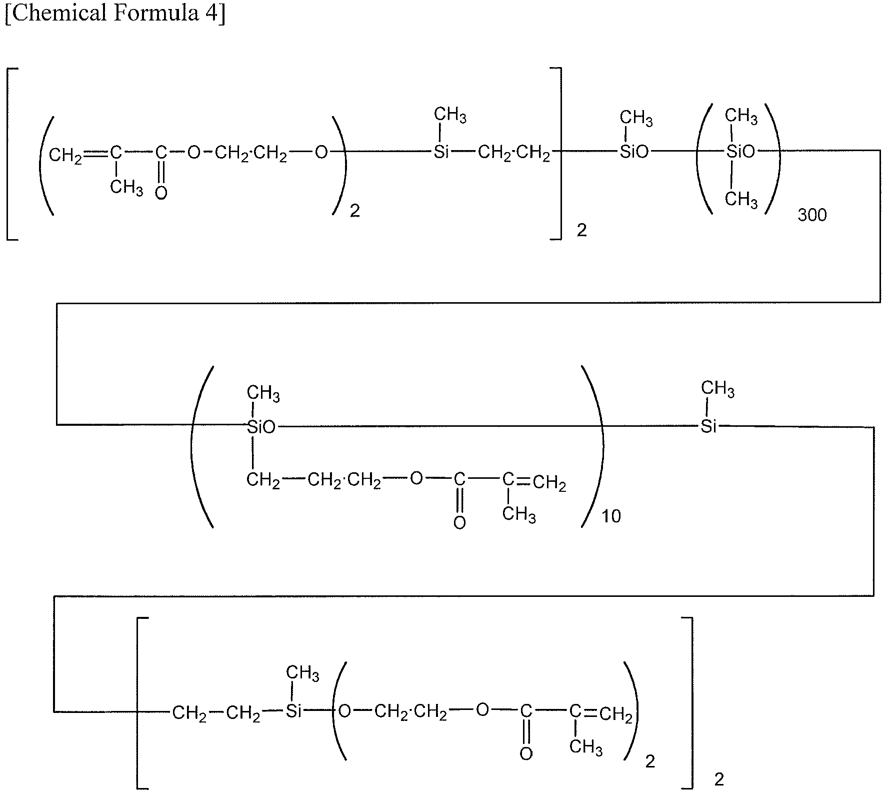

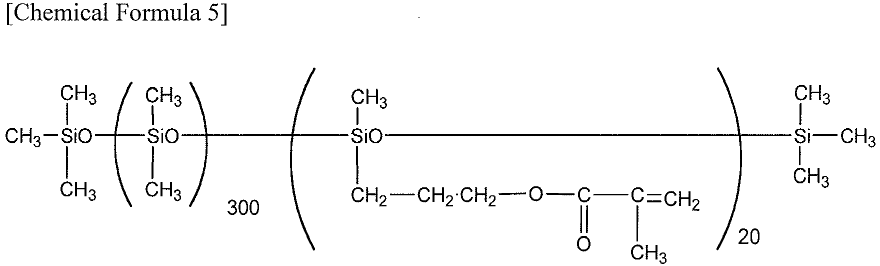

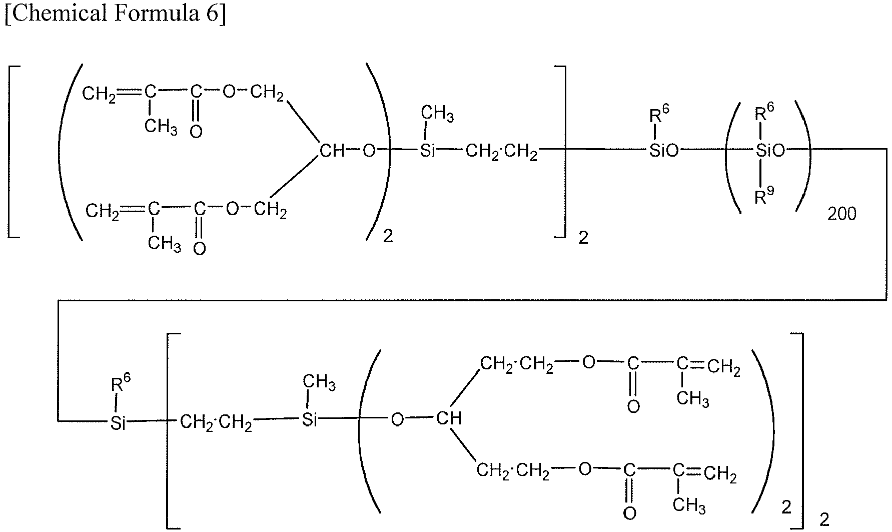

In the above formulas, the R⁶ groups are 90 mol% methyl groups and 10 mol% phenyl groups.

### -- Component (e)

The photopolymerization initiator of the component (e) has the effect of accelerating the photopolymerization of the ultraviolet light-reactive groups within the above component (d). There are no particular limitations on the component (e), and specific examples thereof include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxychlorophenyl ketone, 1-hydroxycyclohexyl phenyl ketone, 2-methyl-(4-(methylthio)phenyl)-2-morpholino-1-propane, 2,2-dimethoxy-2-phenylacetophenone, diethoxyacetophenone, and 2-hydroxy-2-methyl-1-phenylpropan-1-one. From the viewpoint of ensuring high purity, benzophenone, 4-methoxyacetophenone, 4-methylbenzophenone, diethoxyacetophenone, 1-hydroxycyclohexyl phenyl ketone and 2-hydroxy-2-methyl-1-phenylpropan-1-one are preferred, and diethoxyacetophenone, 1-hydroxycyclohexyl phenyl ketone and 2-hydroxy-2-methyl-1-phenylpropan-1-one are particularly desirable. Any one of these photopolymerization initiators may be used alone, or two or more different initiators may be used in combination.

Although there are no particular limitations on the amount added of the component (e), the amount is preferably within a range from 0.01 to 10 parts by mass, more preferably from 0.1 to 3 parts by mass, and still more preferably from 0.5 to 3 parts by mass, per 100 parts by mass of the component (d). Provided the amount added falls within the above range, curing of the silicone composition can be more readily controlled.

### - Addition-Curable Silicone Compositions

Specific examples of addition-curable silicone compositions include compositions comprising:
(f) an organopolysiloxane containing at least two alkenyl groups bonded to silicon atoms,
(g) an organohydrogenpolysiloxane containing at least two hydrogen atoms bonded to silicon atoms (namely, SiH groups), in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

### -- Component (f)

The organopolysiloxane of the component (f) is the base polymer of the addition-curable silicone composition, and contains at least two alkenyl groups bonded to silicon atoms. Conventional organopolysiloxanes can be used as the component (f). The weight-average molecular weight of the organopolysiloxane of the component (f), measured by gel permeation chromatography (hereinafter abbreviated as GPC) and referenced against polystyrene standards, is preferably within a range from approximately 3,000 to 300,000. Moreover, the viscosity at 25°C of the organopolysiloxane of the component (f) is preferably within a range from 100 to 1,000,000 mPa·s, and is more preferably from approximately 1,000 to 100,000 mPa·s. If the viscosity is 100 mPa·s or less, then the thread-forming ability of the composition is poor, and narrowing the diameter of fibers becomes difficult, whereas if the viscosity is 1,000,000 mPa·s or greater, then handling becomes difficult. From the viewpoint of ease of availability of the raw material, the organopolysiloxane of the component (f) is basically either a linear structure with no branching, in which the molecular chain (the main chain) is composed of repeating diorganosiloxane units (R⁷₂SiO_{2/2} units), and both molecular chain terminals are blocked with triorganosiloxy groups (R⁷₃SiO_{1/2}), or a cyclic structure with no branching in which the molecular chain is composed of repeating diorganosiloxane units, although the structure may partially include some branched structures including R⁷SiO_{3/2} units and/or SiO_{4/2} units. In the above description, R⁷ is the same as defined below within the description of formula (4).

Examples of organopolysiloxanes that can be used as the component (f) include organopolysiloxanes having at least two alkenyl groups within each molecule, as represented by an average composition formula (4) shown below:

R⁷₁SiO_{(4-1)/2} (4)

wherein R⁷ represents identical or different, unsubstituted or substituted monovalent hydrocarbon groups of 1 to 10 carbon atoms, and preferably 1 to 8 carbon atoms, and 1 represents a positive number that is preferably within a range from 1.5 to 2.8, more preferably from 1.8 to 2.5, and still more preferably from 1.95 to 2.05. Examples of R⁷ include the same groups as those described above for R¹ in the average composition formula (1).

In this case, at least two of the R⁷ groups represent alkenyl groups (and in particular, alkenyl groups that preferably contain from 2 to 8 carbon atoms, and even more preferably from 2 to 6 carbon atoms). The alkenyl group content among the total of all the organic groups bonded to silicon atoms (that is, among all the unsubstituted and substituted monovalent hydrocarbon groups represented by R⁷ within the above average composition formula (4)) is preferably within a range from 50 to 99 mol%, and more preferably from 75 to 95 mol%. In those cases where the organopolysiloxane of the component (f) has a linear structure, these alkenyl groups may be bonded solely to silicon atoms at the molecular chain terminals or solely to non-terminal silicon atoms within the molecular chain, or may also be bonded to both these types of silicon atoms, but from the viewpoints of the composition curing rate and the physical properties of the resulting cured product and the like, at least one alkenyl group is preferably bonded to a silicon atom at a molecular chain terminal.

### -- Component (g)

The organohydrogenpolysiloxane of the component (g) contains at least two (typically from 2 to 200), and preferably three or more (typically from 3 to 100) hydrogen atoms bonded to silicon atoms (SiH groups). The component (g) reacts with the component (f) and functions as a cross-linking agent. There are no particular limitations on the molecular structure of the component (g), and conventionally produced linear, cyclic, branched, or three dimensional network (resin-like) organohydrogenpolysiloxanes can be used as the component (b). In those cases where the component (g) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from 2 to 300, and is preferably from 4 to approximately 150. An organohydrogenpolysiloxane that is liquid at room temperature (25°C) can be used particularly favorably as the component (g).

Examples of the component (g) include organohydrogenpolysiloxanes represented by an average composition formula (5) shown below.

R⁸ₚH_{q}SiO_{(4-p-q)/2} (5)

wherein R⁸ represents identical or different, unsubstituted or substituted monovalent hydrocarbon groups containing no aliphatic unsaturated bonds and containing 1 to 10 carbon atoms, and preferably 1 to 8 carbon atoms, and p and q represent positive numbers that preferably satisfy 0.7≤p≤2.1, 0.001≤q≤1.0 and 0.8≤p+q≤3.0, and more preferably satisfy 1.0≤p≤2.0, 0.01≤q≤1.0 and 1.5≤p+q≤2.5.
Examples of R⁸ include the same groups as those described above for R¹ in the average composition formula (1) (but excluding the alkenyl groups).

Specific examples of organohydrogenpolysiloxanes represented by the above average composition formula (3) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The amount added of the component (g) must be sufficient to provide from 0.1 to 5.0 mols, preferably from 0.5 to 3.0 mols, and more preferably from 0.8 to 2.0 mols, of SiH groups within this component (g) per 1 mol of alkenyl groups within the entire curable silicone composition, and in particular, per 1 mol of alkenyl groups bonded to silicon atoms within the entire curable silicone composition, and especially per 1 mol of alkenyl groups bonded to silicon atoms within the component (f). The proportion of the alkenyl groups bonded to silicon atoms within the component (f) relative to the total number of alkenyl groups that exist within the entire curable silicone composition is preferably within a range from 80 to 100 mol%, and more preferably from 90 to 100 mol%. In those cases where the component (f) is the only component that contains alkenyl groups within the entire curable silicone composition, the amount of SiH groups within the component (g) per 1 mol of alkenyl groups within the component (f) is typically within a range from 0.1 to 5.0 mols, preferably from 0.5 to 3.0 mols, and more preferably from 0.8 to 2.0 mols. If the amount added of the component (g) yields an amount of SiH groups that is less than 0.1 mols, then the time required for curing lengthens, which is economically undesirable. Further, if the amount added yields an amount of SiH groups that exceeds 5.0 mols, then foaming caused by a dehydrogenation reaction tends to occur within the curing reaction product, and the strength and heat resistance of the cured reaction product tend to be adversely affected.

### -- Component (h)

The platinum group metal-based catalyst of the component (h) is used for accelerating the addition curing reaction (the hydrosilylation reaction) between the component (f) and the component (g). Conventional platinum group metal-based catalysts can be used as the component (h), but the use of platinum or a platinum compound is preferred. Specific examples of the component (h) include platinum black, platinic chloride, chloroplatinic acid, alcohol-modified chloroplatinic acid, and complexes of chloroplatinic acid with olefins, aldehydes, vinylsiloxanes or acetylene alcohols.

The amount added of the component (h) need only be an effective catalytic quantity, may be suitably increased or decreased in accordance with the desired curing reaction rate, and preferably provides a mass of the platinum group metal relative to the mass of the component (f) that falls within a range from 0.1 to 1,000 ppm, and more preferably from 0.2 to 100 ppm.

### - Condensation-Curable Silicone composition

Specific examples of condensation-curable silicone compositions include compositions comprising:
(i) an organopolysiloxane containing at least two silanol groups (namely, silicon atom-bonded hydroxyl groups) or silicon atom-bonded hydrolyzable groups, preferably at both molecular chain terminals,
(j) a hydrolyzable silane and/or a partial hydrolysis-condensation product thereof as an optional component, and
(k) a condensation reaction catalyst as another optional component.

### -- Component (i)

The component (i) is an organopolysiloxane that contains at least two silanol groups or silicon atom-bonded hydrolyzable groups, and functions as the base polymer of the condensation-curable silicone composition. From the viewpoint of ease of availability of the raw material, the organopolysiloxane of the component (i) is preferably basically either a linear structure with no branching, in which the molecular chain (the main chain) is composed of repeating diorganosiloxane units (R⁹₂SiO_{2/2} units), and both molecular chain terminals are blocked with triorganosiloxy groups (R⁹₃SiO_{1/2}), or a cyclic structure with no branching in which the molecular chain is composed of repeating diorganosiloxane units, although the structure may partially include some branched structures. In the above description, R⁹ represents an unsubstituted or substituted monovalent hydrocarbon group of 1 to 10 carbon atoms, and preferably 1 to 8 carbon atoms.

In the organopolysiloxane of the component (i), examples of the hydrolyzable groups other than silanol groups include acyloxy groups such as an acetoxy group, octanoyloxy group and benzoyloxy group; ketoxime groups (namely, iminoxy groups) such as a dimethyl ketoxime group, methyl ethyl ketoxime group and diethyl ketoxime group; alkoxy groups such as a methoxy group, ethoxy group and propoxy group; alkoxyalkoxy groups such as a methoxyethoxy group, ethoxyethoxy group and methoxypropoxy group; alkenyloxy groups such as a vinyloxy group, isopropenyloxy group and 1-ethyl-2-methylvinyloxy group; amino groups such as a dimethylamino group, diethylamino group, butylamino group and cyclohexylamino group; aminoxy groups such as a dimethylaminoxy group and diethylaminoxy group; and amide groups such as an N-methylacetamide group, N-ethylacetamide group and N-methylbenzamide group.

These hydrolyzable groups are preferably positioned at both molecular chain terminals of a linear diorganopolysiloxane, preferably in the form of either siloxy groups that contain two or three hydrolyzable groups, or siloxyalkyl groups that contain two or three hydrolyzable groups, including trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups and dialkoxyorganosiloxyethyl groups.

Examples of the other monovalent hydrocarbon groups bonded to silicon atoms include the same unsubstituted and substituted monovalent hydrocarbon groups as those described above for R¹ in the average composition formula (1).

Specific examples of the component (i) include the compounds shown below.

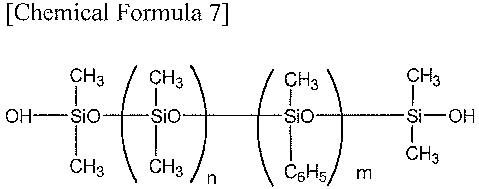

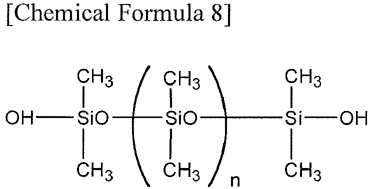

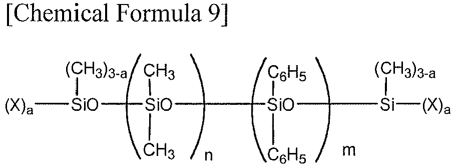

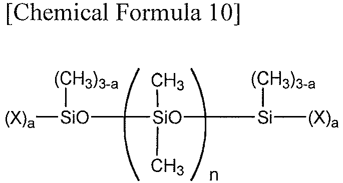

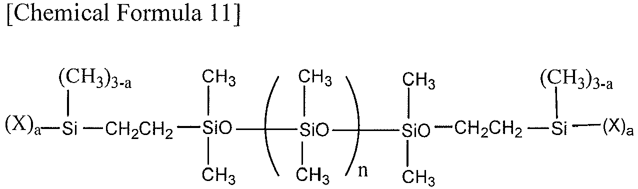

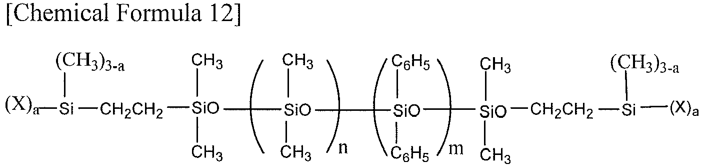

In the above formulas, X represents a hydrolyzable group other than a silanol group, a represents 1, 2 or 3, and each of n and m represents an integer of 1 to 1,000.

Specific examples of the component (i) include dimethylpolysiloxane with both molecular chain terminals blocked with silanol groups, copolymers of dimethylsiloxane and methylphenylsiloxane with both molecular chain terminals blocked with silanol groups, copolymers of dimethylsiloxane and diphenylpolysiloxane with both molecular chain terminals blocked with silanol groups, dimethylpolysiloxane with both molecular chain terminals blocked with trimethoxysiloxy groups, copolymers of dimethylsiloxane and methylphenylsiloxane with both molecular chain terminals blocked with trimethoxysiloxy groups, copolymers of dimethylsiloxane and diphenypolylsiloxane with both molecular chain terminals blocked with trimethoxysiloxy groups, and dimethylpolysiloxane with both molecular chain terminals blocked with 2-trimethoxysiloxyethyl groups. Any one of these compounds may be used alone, or two or more different compounds may be used in combination.

### -- Component (j)

The hydrolyzable silane and/or partial hydrolysis-condensation product thereof of the component (j) is an optional component, and functions as a curing agent. In those cases where the base polymer of the component (i) is an organopolysiloxane that contains at least two silicon atom-bonded hydrolyzable groups other than silanol groups within each molecule, the addition of the component (j) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, and preferably two or more of the hydrolyzable groups) can be used particularly favorably as the component (j).

Examples of compounds that can be used favorably as the above silane include compounds represented by a formula (6) shown below:

R¹⁰ᵣSiX₄₋ᵣ (6)

wherein R¹⁰ represents an unsubstituted or substituted monovalent hydrocarbon group of 1 to 10 carbon atoms, and preferably 1 to 8 carbon atoms, X represents a hydrolyzable group, and r represents either 0 or 1. Examples of preferred groups for R¹⁰ include alkyl groups such as a methyl group, ethyl group, propyl group, butyl group, pentyl group and hexyl group; aryl groups such as a phenyl group and tolyl group; and alkenyl groups such as a vinyl group and allyl group.

Specific examples of the component (j) include methyltriethoxysilane, vinyltriethoxysilane, vinyltriacetoxysilane, ethyl orthosilicate, and partial hydrolysis-condensation products of these compounds. Any one of these compounds may be used alone, or two or more different compounds may be used in combination.

In those cases where a hydrolyzable silane and/or partial hydrolysis-condensation product thereof is used as the component (j), the amount added of the component (j) is preferably within a range from 0.01 to 20 parts by mass, and more preferably from 0.1 to 10 parts by mass, per 100 parts by mass of the component (i). In those cases where the component (j) is used, using an amount that satisfies the above range ensures that the composition of the present invention exhibits particularly superior storage stability and curing reaction rate.

### -- Component (k)

The condensation reaction catalyst of the component (k) is an optional component, and need not be used in cases where the above hydrolyzable silane and/or partial hydrolysis-condensation product thereof of the component (j) contains aminoxy groups, amino groups or ketoxime groups or the like. Examples of the condensation reaction catalyst of the component (k) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin di(2-ethylhexanoate); metal salts of organic carboxylic acids such as tin naphthenate, tin oleate, tin butyrate, cobalt naphthenate and zinc stearate; amine compounds or the salts thereof such as hexylamine and dodecylamine phosphate; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and guanidyl group-containing organosilicon compounds. Any one of these catalysts may be used alone, or two or more different catalysts may be used in combination.

In those cases where a condensation reaction catalyst of the component (k) is used, there are no particular limitations on the amount added, but the amount is preferably within a range from 0.01 to 20 parts by mass, and more preferably from 0.1 to 10 parts by mass, per 100 parts by mass of the component (i). If the component (k) is used, then provided the amount satisfies the above range, the composition is economically viable from the viewpoints of the curing time and curing temperature.

In step (1), when the porous silicon carbide substrate is impregnated with the curable silicone composition, the composition is preferably in liquid form in order to improve the workability of the impregnation. For example, the liquid composition may be a solvent-free liquid composition, an aqueous emulsion-type composition, or a solution-type composition prepared by diluting the composition with an organic solvent such as toluene or tetrahydrofuran. The viscosity of the liquid composition is preferably selected with due consideration of the porous structure of the porous silicon carbide substrate so as to achieve good penetration of the liquid composition. When the composition is a solvent-free liquid, the liquid is heated to achieve a viscosity within a range from 1 to 50,000 mPa·s, and preferably from 10 to 10,000 mPa·s, prior to use within the impregnation step. When the composition is in the form of an aqueous emulsion or a solution that has been diluted with an organic solvent such as toluene or tetrahydrofuran, the viscosity at 25°C is adjusted to a value within a range from 1 to 50,000 mPa·s, and preferably from 10 to 10,000 mPa·s. In this case, there are no particular limitations on the impregnation method used, and dipping or spray coating methods may be used. If the viscosity of the impregnation liquid exceeds 50,000 mPa·s, then the penetrability of the composition into the substrate deteriorates, and a favorable impregnation layer cannot be formed.

The penetration of the curable silicone composition into the substrate may occur only at the surface layer portion of the substrate, or may involve complete impregnation down into the depths of the substrate. A portion of the composition may also be left so as to coat the surface of the substrate. The residual composition is usually left so as to cover the surface of the substrate in the form of a coating, but if desired, this residual surface composition may be removed. The impregnation rate from the surface (namely, the degree of impregnation in the depth direction) may be selected as appropriate, in accordance with the purpose of the densification and the resulting properties. Usually, the impregnation rate is preferably at least 0.0 1 %, more preferably 0.1 % or more, and still more preferably 1% or more. The upper limit is not more than 100%. In terms of an impregnation rate range, a range from 0.1 to 100% is preferred, and 1 to 100% is more preferred. If this impregnation rate is too low, then leakage of impurity elements from the silicon carbide substrate cannot be satisfactorily prevented, and the mechanical strength of the silicon carbide substrate can not be satisfactorily increased. In those cases where the deep portions of the substrate are left in a porous state, the impregnation rate is typically not more than 50%, and may be 40% or less, or even 35% or less.

### - Step (2) -

In step (2), curing of the curable silicone composition that was impregnated in step (1) is performed, thereby forming an impregnation layer composed of a silicone cured product. The curing conditions used at this time may be set appropriately in accordance with the type of curable silicone composition used. This point is described below in further detail.

### - The case of an Organic Peroxide-Curable Silicone Composition:

Heating the substrate that has been impregnated with the organic peroxide-curable silicone composition causes a radical reaction to proceed and the curing reaction to proceed, thereby curing the organic peroxide-curable silicone composition and bonding the members together. In terms of the temperature used for curing the organic peroxide-curable silicone composition, because the curing reaction is dependent on the curable silicone composition impregnation rate or the amount of impregnation, although there are no particular limitations, the temperature is preferably within a range from 80 to 300°C, and more preferably from 150 to 250°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of an Ultraviolet Light-Curable Silicone Composition:

Irradiating ultraviolet light onto the substrate that has been impregnated with the ultraviolet light-curable silicone composition causes the photopolymerization initiator to react and the curing reaction to proceed, thereby curing the ultraviolet light-curable silicone composition. In terms of the ultraviolet light irradiation conditions, because the curing reaction is dependent on the impregnation rate or the amount of impregnation, although there are no particular limitations, curing can typically be conducted by performing the ultraviolet light irradiation using ultraviolet light emitting diodes with an emission wavelength of 365 nm, under conditions including an intensity of 5 to 500 mW/cm², and preferably 10 to 200 mW/cm², and an exposure dose of 0.5 to 100 J/cm², and preferably 10 to 50 J/cm². Further, secondary curing may also be conducted if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of an Addition-Curable Silicone Composition:

Heating the substrate that has been impregnated with the addition-curable silicone composition causes a hydrosilylation reaction to proceed, thereby curing the addition-curable silicone composition. In terms of the heating temperature used, because the curing reaction is dependent on the impregnation rate or the amount of impregnation, although there are no particular limitations, the temperature is preferably within a range from 80 to 300°C, and more preferably from 100 to 200°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of a Condensation-Curable Silicone Composition:

Heating the substrate that has been impregnated with the condensation-curable silicone composition causes a condensation reaction to proceed, thereby curing the condensation-curable silicone composition. In terms of the temperature used for curing the condensation-curable silicone composition, because the curing reaction is dependent on the impregnation rate or the amount of impregnation, although there are no particular limitations, the temperature is preferably within a range from 80 to 300°C, and more preferably from 100 to 200°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - Step (3) -

In step (3), the silicone cured product that has been formed in an impregnated state in the previous step is thermally decomposed in a non-oxidizing atmosphere to convert the cured product to silicon carbide.

The heat treatment is performed under a non-oxidizing atmosphere, and preferably under an inert gas atmosphere. Examples of the inert gas include nitrogen gas, argon gas and helium gas, and argon gas is particularly desirable in terms of obtaining a high-purity silicon carbide.

Further, the heat treatment is performed at a temperature exceeding 1,500°C but not higher than 2,200°C. This heating temperature is preferably 1,600°C or higher. Furthermore, the heating temperature is preferably not higher than 2,100°C, and more preferably 2,000°C or lower. Prior to performing the heat treatment at this temperature, a heat treatment is preferably first conducted at a temperature within a range from 400 to 1,500°C under the same non-oxidizing atmosphere. The heat treatment at this temperature causes cleavage of the carbon-hydrogen bonds within the silicone, causing elimination of hydrogen from the material, but the inorganic ceramization proceeds without the elimination of carbon or silicon. Subsequent heating at a temperature exceeding 1,500°C causes elimination of carbon monoxide to start, eventually resulting in the formation of silicon carbide. If the temperature exceeds 2,200°C, then sublimation of silicon carbide becomes severe, which is undesirable.

Further, the end point of the heat treatment can be specified, for example, as the point where heating of the heated product at 1,800°C for one hour yields a mass loss that is equivalent to less than 1% by mass of the original silicone composition.
In this manner, silicon carbide is generated within the filled pores of the porous silicon carbide substrate, yielding a densified material. At this time, in those cases where the curable silicone composition was applied so as to coat the surface of the substrate in step (1), a silicon carbide coating film that coats the substrate surface is formed in an integrated manner with the internal impregnated silicon carbide phase.

The present invention provides a densified silicon carbide body obtained using the method described above and having a porous silicon carbide substrate, and a silicon carbide that fills pores within the substrate, at least within the surface layer of the substrate. The fill rate from the surface of the silicon carbide (namely, the fill rate from the surface in the depth direction, equivalent to the aforementioned impregnation rate) is typically at least 0.01 %, preferably 0.1 % or more, and more preferably 1% or more. The upper limit is not more than 100%. In terms of a fill rate range, a range from 0.1 to 100% is preferred, and 1 to 100% is more preferred.
In one particular embodiment, the present invention provides a densified silicon carbide body in which the pores within the surface layer of the porous silicon carbide substrate are filled with silicon carbide, but pores within the core section of the substrate are not filled. This densified silicon carbide body exhibits markedly improved mechanical strength compared with the porous silicon carbide substrate used as the starting substrate. In this embodiment, the fill rate from the surface of the silicon carbide is typically not more than 50%, and need be not more than 40%, or even 35% or less. This type of product in which the deep portions remain porous is easier to produce, and offers the advantage of still providing a significant improvement in the mechanical strength.

### Examples

A more detailed description of the present invention is presented below based on a series of examples, although the present invention is in no way limited by these examples.

### [Example 1]

### Materials:

(A) 100 parts by mass of a diorganopolysiloxane containing alkenyl groups within each molecule, represented by a formula shown below: 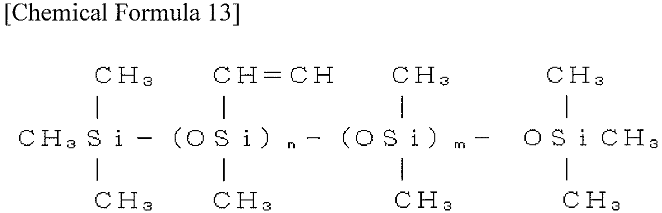 wherein n and m are numbers such that n/m = 4/1 and the viscosity of the siloxane at 25°C is 600 mPa·s.
(B) 0.5 parts by mass of benzoyl peroxide.
(C) 33 parts by mass of a diorganopolysiloxane containing hydrogen atoms bonded to silicon atoms, represented by a formula shown below. 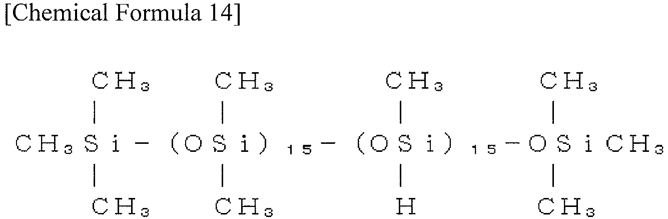
(D) 160 parts by mass of a silicon carbide powder (average particle size: 2 µm) (namely, an amount equivalent to 33% by volume of the entire silicone composition)

A porous silicon carbide substrate (length: 20 mm × width: 20 mm × thickness: 2 mm, 1.9 g, specific gravity: 2.38) having an average pore size of 5 µm was dipped in the composition, thus thoroughly impregnating the substrate with the composition. The resulting silicone-impregnated porous silicon carbide substrate was heated at a temperature of approximately 200°C for 30 minutes to cure the impregnated silicone composition. When the thus obtained cured silicone-impregnated silicon carbide material was weighed, the mass was found to have increased by 0.3 g compared with the untreated silicon carbide substrate. This cured silicone-impregnated silicon carbide material was placed inside a container formed from carbon, which was then placed inside an atmosphere furnace, and under an atmosphere of argon gas, the temperature was raised to 2,000°C over a 20-hour period at a rate of temperature increase of 100°C/hour, and then held at 2,000°C for two hours. Subsequently, the temperature was cooled to room temperature at a rate of 200°C/hour, yielding a green solid material. The dimensions of this green solid material were length: 20 mm × width: 20 mm × thickness: 2 mm, indicating that there had been no change in the shape or dimensions of the material from the untreated substrate. When the green solid material was weighed, the mass was 2.1 g (specific gravity: 2.50).
The untreated silicon carbide substrate and the aforementioned treated green solid material were each processed into a rod shape having a length of 18 mm, a thickness of 2 mm and a width of 3 mm, and the three-point flexural strength was measured in accordance with JIS-R-1601. The three-point flexural strength of the untreated silicon carbide substrate was 70 MPa, whereas the three-point flexural strength of the treated green solid material was measured as 110 MPa, indicating a significant increase.

### - Measurement of Elemental Ratio

A sample of the silicon carbide coating film derived from the cured silicone and formed on the surface of the obtained green solid material was scraped off, and when this sample was subjected to an oxygen analysis using an oxygen analyzer (product name: TC436, manufactured by LECO Corporation), the oxygen content was not more than 0.2% by mass. The elemental ratio was Si₁C_{1 00}.

### - Analysis of Impurity Elements

With the exception of not impregnating the above curable silicone composition into the porous silicon carbide substrate, and simply treating 5 g of the composition inside a carbon container (supplementation of dimensions and materials), curing and heat treatment were conducted in the same manner as that described above, yielding a green solid. When this solid was analyzed by ICP emission analysis, the results shown in Table 1 were obtained for the various element content values. A result of "<0.1 " indicates that the result was less than the detection limit of 0.1 ppm.

**[Table 1]**

| Analyzed element | Measured value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

These results revealed that nickel, chromium, iron and aluminum, which are impurity elements that typically cause problems in the field of semiconductor devices, were all less than the detection limit.

### [Example 2]

100 parts by mass of a liquid organopolysiloxane represented by a formula shown below:

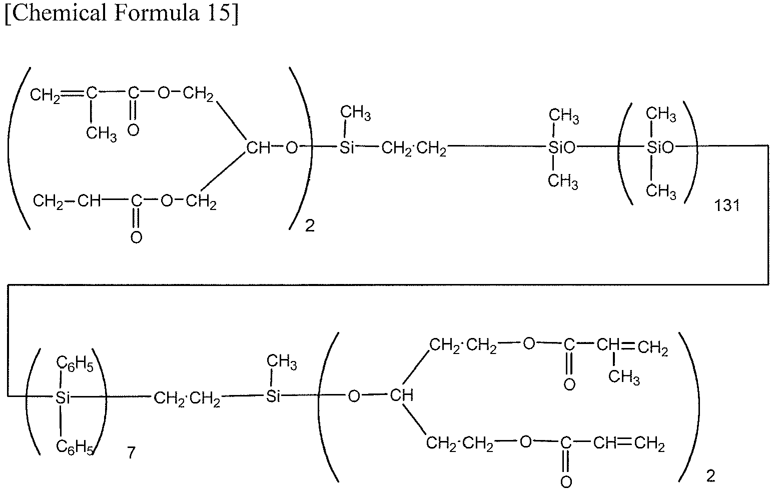

2 parts by mass of 2-hydroxy-2-methyl-1-phenylpropan-1-one, 1 part by mass of 2,4,6-trimethylbenzoyldiphenylphosphine oxide, 1 part by mass of a partial hydrolysis-condensation product of tetramethoxysilane (a methoxysiloxane oligomer), 1 part by mass of a titanium chelate compound represented by a formula shown below:

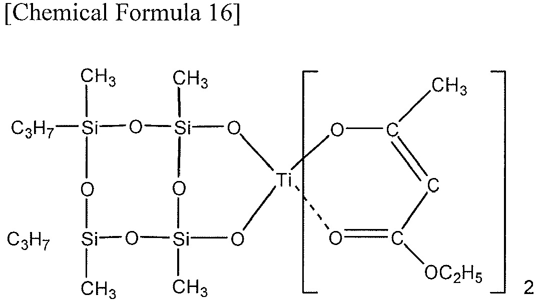

and an amount of a silicon carbide powder (average particle size: 2 µm) equivalent to 33% by volume of the entire silicone composition were placed in a planetary mixer (a registered trademark, a mixing device manufactured by Inoue Manufacturing Co., Ltd.), and were stirred and mixed for one hour at room temperature, yielding an ultraviolet light-curable silicone composition with a viscosity at room temperature of 2,000 mPa·s. A porous silicon carbide substrate (length: 20 mm × width: 20 mm × thickness: 2 mm, 1.9 g) having an average pore size of 5 µm similar to that used in the example 1 was dipped in the composition, thus thoroughly impregnating the substrate with the composition. The resulting silicone-impregnated porous silicon carbide substrate was irradiated with ultraviolet light using two metal halide mercury lamps (intensity: 80 W/cm², energy: 400 mJ/s), thereby curing the silicone composition. When the thus obtained cured silicone-impregnated silicon carbide material was weighed, the mass was found to have increased by 0.3 g. This cured silicone-impregnated silicon carbide material was heated in an argon gas atmosphere in the same manner as that described for the example 1, yielding a green solid material. The dimensions of this green solid material were length: 20 mm × width: 20 mm × thickness: 2 mm, the same as the untreated silicon carbide substrate. When the green solid material was weighed, the mass was 2.1 g (specific gravity: 2.50).

In the same manner as the example 1, the untreated substrate and the treated substrate were each processed into a rod shape having a length of 18 mm, a thickness of 2 mm and a width of 3 mm, and the three-point flexural strength was measured in accordance with JIS-R-1601. The three-point flexural strength of the treated green solid material was measured as 110 MPa, indicating a significant increase.

### - Measurement of Elemental Ratio

When the silicon carbide coating film from the surface of the obtained green solid material was subjected to a carbon analysis using a carbon analyzer (product name: CS-444LS, manufactured by LECO Corporation), the carbon content was 30.3% by mass. Further, when the yellow-green solid material was subjected to an oxygen analysis using an oxygen analyzer (product name: TC436, manufactured by LECO Corporation), the oxygen content was not more than 0.2% by mass. The elemental ratio was Si₁C_{1.02}.

### - Analysis of Impurity Elements

An elemental analysis sample was prepared in the same manner as that described in the example 1, and when the sample was analyzed by ICP emission analysis, the results shown in Table 2 were obtained. A result of "<0.1" indicates that the result was less than the detection limit of 0.1 ppm.

**[Table 2]**

| Analyzed element | Measured value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

### Industrial Applicability

A porous silicon carbide material that has been densified using the method of the present invention can be used, for example, in the field of semiconductor device production, as a material for boards and process tubes and the like that are used within steps for conducting heat treatments of semiconductor wafers, or conducting thermal diffusion of trace elements within semiconductor wafers.

## Claims

1. A method of densifying a porous silicon carbide substrate, the method comprising the steps of:
impregnating at least a surface layer of a porous silicon carbide substrate with a liquid curable silicone composition,
curing the thus impregnated silicone composition, and
thermally decomposing a thus obtained silicone cured product in an impregnated state within a non-oxidizing atmosphere to convert the cured product to silicon carbide.

2. The method according to claim 1, wherein the liquid curable silicone composition comprises a silicon carbide powder.

3. The method according to claim 2, wherein the silicon carbide powder is included within the composition in an amount within a range from 5 to 90% by volume.

4. The method according to claim 1, wherein the curable silicone composition is an organic peroxide-curable silicone composition.

5. The method according to claim 4, wherein the organic peroxide-curable silicone composition is a composition comprising:
(a) an organopolysiloxane containing at least two alkenyl groups bonded to silicon atoms,
(b) an organic peroxide, and
(c) as an optional component, an organohydrogenpolysiloxane containing at least two hydrogen atoms bonded to silicon atoms, in an amount that provides 0.1 to 2 mols of hydrogen atoms bonded to silicon atoms within the component (c) per 1 mol of alkenyl groups within the entire curable silicone composition.

6. The method according to claim 1, wherein the curable silicone composition is a radiation-curable silicone composition.

7. The method according to claim 6, wherein the radiation-curable silicone composition is an ultraviolet light-curable silicone composition comprising:
(d) an ultraviolet light-reactive organopolysiloxane, and
(e) a photopolymerization initiator.

8. The method according to claim 7, wherein the ultraviolet light-reactive organopolysiloxane of the component (d) is an organopolysiloxane having at least two ultraviolet light-reactive groups, represented by a general formula (3a) shown below: 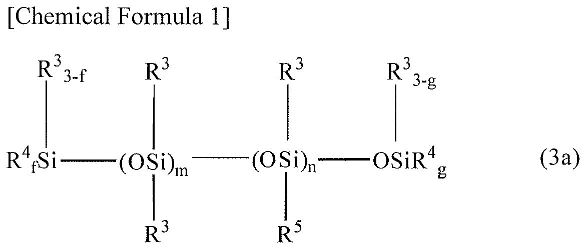 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, and g represents an integer of 0 to 3, provided that f+g+n≥2.

9. The method according to claim 8, wherein each of the ultraviolet light-reactive groups is an alkenyl group, alkenyloxy group, acryloyl group, methacryloyl group, mercapto group, epoxy group or hydrosilyl group.

10. The method according to claim 7, wherein the ultraviolet light-reactive organopolysiloxane of the component (d) is an organopolysiloxane having at least two ultraviolet light-reactive groups, represented by a general formula (3b) shown below: 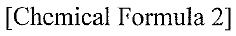 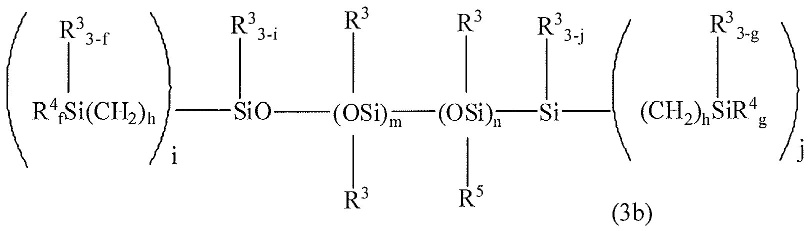 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, g represents an integer of 0 to 3, h represents an integer of 2 to 4, and i and j each represents an integer of 1 to 3, provided that fi+gj+n≥2.

11. The method according to claim 10, wherein each of the ultraviolet light-reactive groups is an alkenyl group, alkenyloxy group, acryloyl group, methacryloyl group, mercapto group, epoxy group or hydrosilyl group.

12. The method according to claim 7, wherein the component (e) is included in an amount of 0.01 to 10 parts by mass per 100 parts by mass of the component (d).

13. The method according to claim 1, wherein the curable silicone composition is an addition-curable silicone composition.

14. The method according to claim 13, wherein the addition-curable silicone composition is a composition comprising:
(f) an organopolysiloxane containing at least two alkenyl groups bonded to silicon atoms,
(g) an organohydrogenpolysiloxane containing at least two hydrogen atoms bonded to silicon atoms, in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

15. The method according to claim 1, wherein the curable silicone composition is a condensation-curable silicone composition.

16. The method according to claim 15, wherein the condensation-curable silicone composition is a composition comprising:
(i) an organopolysiloxane containing at least two silanol groups or silicon atom-bonded hydrolyzable groups,
(j) a hydrolyzable silane, a partial hydrolysis-condensation product thereof, or a combination thereof as an optional component, and
(k) a condensation reaction catalyst as another optional component.

17. The method according to claim 1, wherein a temperature during thermal decomposition is within a temperature range exceeding 1,500°C but not higher than 2,200°C.

18. A densified silicon carbide body, having a porous silicon carbide substrate, and a silicon carbide that fills pores within the substrate, at least within a surface layer of the substrate.

19. The densified silicon carbide body according to claim 18, wherein pores within a surface layer of the porous silicon carbide substrate are filled with silicon carbide, but pores within a core section of the substrate are not filled.

20. The densified silicon carbide body according to claim 18, wherein the densified silicon carbide body is produced using the method defined in claim 1.
